# EUROPÄISCHE PATENTSCHRIFT

(11) **EP 1 352 539 B1**
(45) Veröffentlichungstag und Bekanntmachung des Hinweises auf die Patenterteilung: **28.08.2013**
(21) Anmeldenummer: 02701166.7
(22) Anmeldetag: 04.01.2002
(51) Int. Cl.: H04W 4/22, H04W 76/00

(54) **NOTRUFMELDUNG MITTELS MOBILER TELEKOMMUNIKATIONSGERÄTE**
EMERGENCY CALL SIGNALLING USING MOBILE TELECOMMUNICATIONS DEVICES
SIGNALISATION D'APPEL D'URGENCE AU MOYEN D'APPAREILS DE TELECOMMUNICATION MOBILE

(30) Priorität: 12.01.2001 DE 10101282
(43) Veröffentlichungstag der Anmeldung: 15.10.2003
(73) Patentinhaber: Siemens Aktiengesellschaft, 80333 München (DE)
(72) Erfinder: BÄR, Siegfried, 75179 Pforzheim (DE); GOTTSCHALK, Thomas, 12524 Berlin (DE); KOWALEWSKI, Frank, 38228 Salzgitter (DE); HANS, Martin, 31141 Hildesheim (DE); BECKMANN, Mark, 38102 Braunschweig (DE); SCHMIDT, Gunnar, 38304 Wolfenbüttel (DE); LAUMEN, Josef, 31141 Hildesheim (DE); CHOI, Hyung-Nam, 22117 Hamburg (DE)
(86) Internationale Anmeldenummer: PCT/DE2002/000013
(87) Internationale Veröffentlichungsnummer: WO 2002/056624

(56) Entgegenhaltungen:
- WO-A-97/23104
- DE-A- 19 633 872
- DE-A- 19 650 176
- DE-A- 19 817 962
- US-A- 5 388 147
- US-A- 6 100 806
- ETSI: "Digital cellular telecommunications system (Phase 2+) (GSM); Universal Mobile Telecommunications System (UMTS); Mobile radio interface layer 3 specification; Core Network Protocols-Stage 3 (3GPP TS 24.008 version 3.5.0 Release 1999)" ETSI TS 124 008 V3.5.0 (2000-09), September 2000 (2000-09), Seiten 1-73, XP002209054 France
- ETSI: "Universal Mobile Telecommunications System (UMTS); Stage 2 Functional Specification of Location Services in UTRAN (3GPP TS 25.305 version 3.3.0 Release 1999)" ETSI TS 125 305 V3.3.0 (2000-09), September 2000 (2000-09), Seiten 1-42, XP002209055 FRANCE

## Beschreibung

In Mobilfunknetzen hat sich in den letzten Jahren verstärkt die Möglichkeit etabliert, neben dem manuellen Wählen einer Notrufnummer einen Notruf auch automatisiert abzusetzen. Dieser Service wird als "emergency call" bezeichnet und bewirkt eine automatische Verbindung zwischen einem mobilen Telekommunikationsgerät und einem sog. LCS-client, also etwa einer Notrufzentrale. Hierfür kann beispielsweise in Kraftfahrzeugen ein Unfallsensor vorhanden sein, der bei Detektion eines Unfalls automatisch - eventuell nach Abfrage der Reaktion des Fahrers - den emergency call auslöst. Dabei muß beispielsweise bei Bewußtlosigkeit des Fahrers eine Lokalisierung des Fahrzeugs möglich sein. Hierfür ist eine Abfrageprozedur etwa im UMTS-(universal mobile telephone system)-Standard vorgesehen, mit deren Hilfe bei Aussenden eines emergency calls die Lokalisierung des Mobiltelekommunikationsgeräts auch ohne Zutun eines Benutzers möglich sein soll.

Auch außerhalb des emergency calls kann eine Lokalisierung eines mobilen Telekommunikationsgeräts unter Umständen wünschenswert sein.

Aus der WO 97/23104 ist ein Verfahren zur Übermittlung eines Notrufs eines Mobilfunkteilnehmergeräts an eine Notrufzentrale in einem PCS 1900 Mobilfunksystem bekannt, bei dem auf die Anforderung einer Notfallhilfe, z.B. durch Eingabe einer Notrufnummer wie z.B. "9-1-1", gegebenenfalls Positionsdaten des Mobilfunkteilnehmergeräts übermittelt werden:

Aus der US 5,388,147 ist ein Notrufverfahren in einem zellularen Telekommunikationssystem bekannt, bei dem Positionsdaten des rufenden Mobilfunkgeräts erst nach Aufbau eines digitalen Übertragungskanals an eine Notrufzentrale übermittelt werden.

Der Erfindung liegt das Problem zugrunde, die Lokalisierung von mobilen Telekommunikationsgeräten zu beschleunigen.

Die Erfindung löst das Problem durch folgendes Verfahren:
Verfahren zur Notrufabsendung eines mobilen Telekommunikationsgeräts in einem UMTS-Mobiltelekommunikationsnetz, wobei in einem ersten Schritt zu einem Serving Radio Network Controller eine Anfrage RRC connection request zum Aufbau einer RRC-Verbindung gesendet wird, wobei in einem zweiten Schritt vom Serving Radio Network Controller nach erfolgreicher Erkennung der Anfrage die Bestätigung der Anfrage durch ein Signal RRC Connection Setup an das elekommunikationsgerät zurückgesandt wird, wobei in einem dritten Schritt vom Telekommunikationsgerät mit einer Nachricht RRC Connection Complete die aufgebaute RRC-Verbindung zum Serving Radio Network Controller bestätigt wird, wobei die aktuelle Position des jeweiligen mobilen Telekommunikationsgeräts vor Absendung des Notrufs oder während der Absendung des Notrufs unabhängig von weiteren Bestandteilen des Mobiltelekommunikationsnetzes ermittelt und mit der Nachricht RRC Connection Complete bereits im dritten Schritt an den Serving Radio Network Controller übertragen wird, und wobei dann anschließend mit Hilfe eines Mobile-services Switching Centers, das in Verbindung mit dem Serving Radio Network Controller steht, eine direkte Verbindung zwischen dem Telekommunikationsgerät und einem Location Service Call Client hergestellt wird.

Dadurch, dass die Position des jeweiligen, den Notruf absendenden Teilnehmergeräts gleich am Anfang der Notrufnachricht übermittelt wird, ist die Zeit zur Ausführung der Notrufnachricht erheblich vermindert. Das mobile Teilnehmergerät muss dann nicht auf eine Aufforderung zur Positionsermittlung warten.

Die Erfindung betrifft auch ein Mobiltelekommunikationsnetz mit mobilen Telekommunikationsgeräten und mit einem Serving Radio Network Controller zur Durchführung des erfindungsgemäßen Verfahrens.

Hinsichtlich vorteilhafter Ausgestaltungen wird auf die Ansprüche 2 bis 7 verwiesen.

Dadurch, daß entweder die Position des mobilen Telekommunikationsgeräts bereits vor Absendung eines möglichen Notrufs bekannt ist oder während des Notrufs unabhängig von weiteren Komponenten des Mobiltelekommunikationsnetzes ermittelt wird, braucht in der Abfrageprozedur des Notrufs nicht mehr die Position über eine Peilung von mehreren Sendern des Mobiltelekommunikationsgeräts ermittelt zu werden. Die Notrufabsetzung ist daher erheblich beschleunigt, die Zuverlässigkeit zudem verbessert, da unter Umständen in der Notsituation eine schlechte Verbindung des mobilen Telekommunikationsgeräts zu weiteren Komponenten, etwa festen Sendeanlagen, des Mobiltelekommunikationsnetzes vorliegt. Das Verfahren ist auf jede Art von mobilen Telekommunikationsgeräten, etwa Endgeräte oder auch Verteiler in Schiffen oder Straßenfahrzeugen oder auf andere Telekommunikationsgeräte, anwendbar.

Eine besonders zuverlässige Positionsbestimmung ist dann ermöglicht, wenn diese völlig ohne Zutun eines jeweiligen Benutzers abläuft, etwa in einem regelmäßigen Zeittakt durchgeführt wird. Dann ist jederzeit sichergestellt, daß bei Auftreten einer Notwendigkeit zur Abgabe eines Notrufsignals eine Positionsbestimmung vorliegt. Diese sollte nicht zu weit zurückliegen, der Zeittakt ist daher eng einzustellen.

Um auch in abgelegenen Gebieten die Positionsbestimmung vorab durchführen zu können, kann diese beispielsweise auch unter Zuhilfenahme weiterer mobiler Telekommunikationsgeräte, und nicht nur über feste Sendeanlagen, erfolgen.

Das Positionssignal kann dann mit der Notrufmeldung wiederum ohne Einwirkung des Benutzers übertragbar sein.

Eine Positionsbestimmung ohne Nutzung weiterer Komponenten des Mobiltelekommunikationsnetzes ist insbesondere über das Global Positioning System (GPS) von jedem mobilen Telekommunikationsgerät, das mit einem entsprechenden Modul ausgerüstet ist, möglich.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Abbildung einer Positionsbestim-mung im UMTS-Standard,
- Fig. 2: ein konventionelles Ablaufprotokoll eines Notrufs im UMTS-Standard,
- Fig. 3: ein Ablaufschema für einen Notruf in erfindungsge-mäßer Ausbildung,
- Fig. 4: eine prinzipielle Darstellung eines Verfahrens der Positionsbestimmung in Draufsicht auf mehrere feste Sendeanlagen und ein mobiles Telekommunikationsge-rät.

In einem ersten Ausführungsbeispiel wird die Position des mobilen Telekommunikationsgeräts UE vor Absendung eines Notrufs bestimmt.

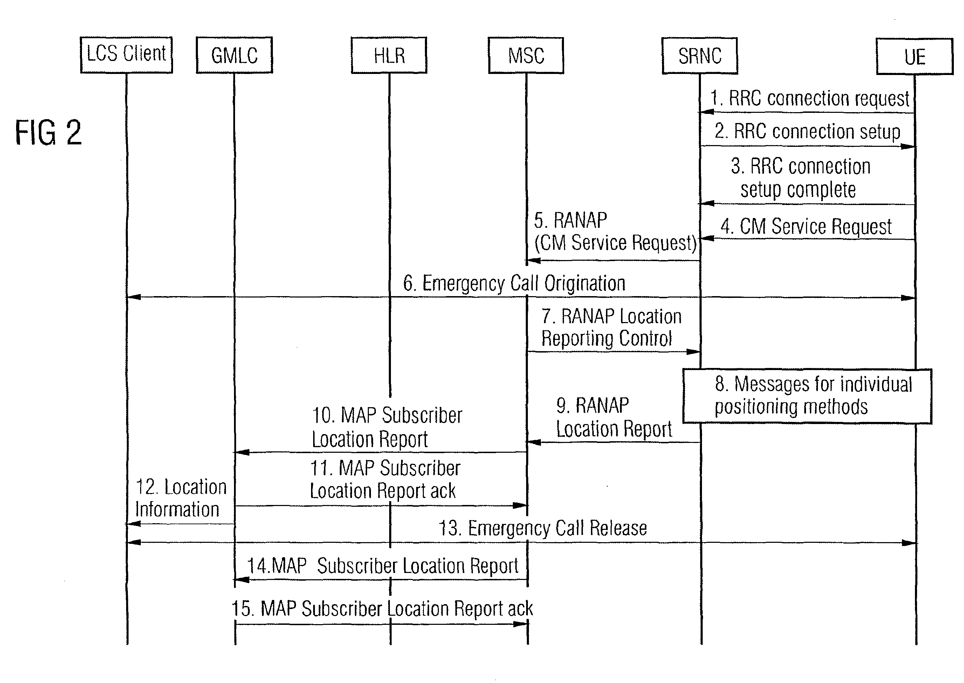

Zur Erläuterung ist hier beispielhaft ein bisheriges Ablaufprotokoll eines Notrufs (in Fig. 2 für den UMTS-Standard in der Entwicklungsstufe Release 99 angegeben) dargestellt.

Eingeleitet wird der Notruf durch eine Anfrage 1 des mobilen Telekommunikationsgeräts UE (User Equipment), die bereits die Information enthält, daß es sich hierbei um einen Notruf handelt. Dies kann beispielweise durch eine manuelle Aktion eines Benutzers geschehen oder durch einen automatisierten Mechanismus, wie etwa einen Unfalldetektor, erfolgen.

In den zunächst ablaufenden ersten drei Schritten wird eine Verbindung zwischen dem mobilen Telekommunikationsgerät UE und der Kontrollstelle SRNC (Serving Radio Network Controller) entsprechend dem RRC-(Radio Ressource Control)-Protokoll aufgebaut.

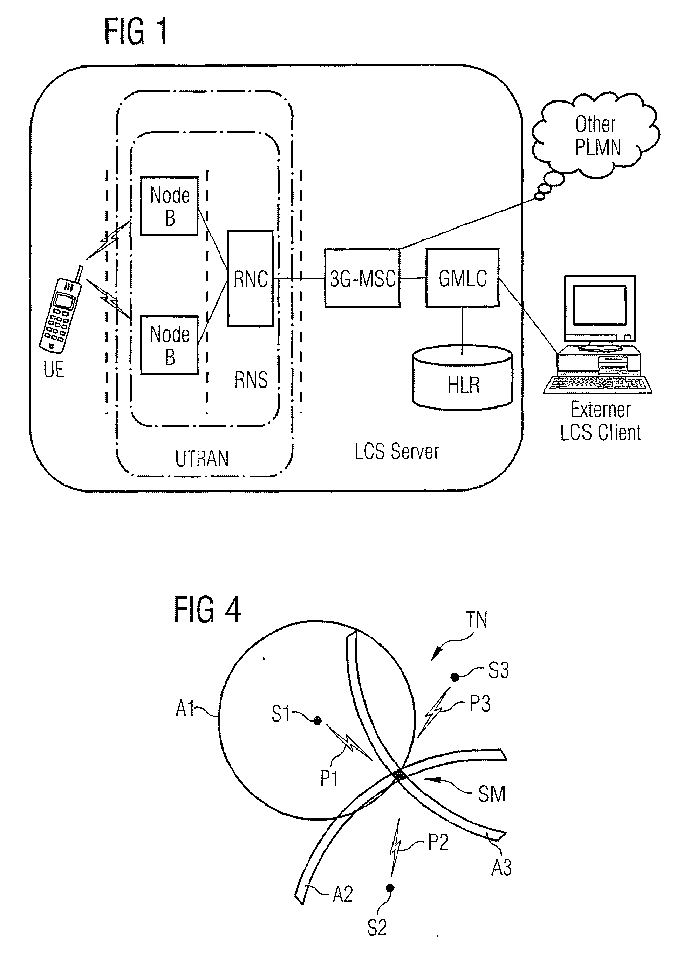

Die Anfrage 1 nach Aufbau einer Verbindung (RRC connection request) wird an eine im Telekommunikationsnetz TN enthaltene feste Kontrollstelle SRNC (Serving Radio Network Controller) gesandt. Diese verwaltet und kontrolliert mehrere Sendeanlagen S1, S2, S3...., die auch als NodeB bezeichnet werden, überwacht somit auch mehrere Mobilfunkzellen. Eine Einheit aus einer (S)RNC und mehreren Node B wird als Radio Network System (RNS) bezeichnet, wie in Fig. 1 dargestellt ist. Mehrere RNS sind in einem UTRAN (Universal Terrestrial Radio Access Network) zusammengefaßt.

Von der Kontrollstelle SRNC wird nach erfolgreicher Erkennung der Anfrage 1 die Bestätigung der Anfrage 1 und der Aufbau der Verbindung durch ein gemeinsames Signal 2 (RRC connection setup) an das anfragende Telekommunikationsgerät UE zurückgesandt.

Im dritten Schritt bestätigt dieses Telekommunikationsgerät UE mit der Nachricht 3 (RRC connection complete) den Verbindungsaufbau, die RRC-Verbindung zwischen Kontrollstelle SRNC und mobilem Telekommunikationsgerät UE ist damit hergestellt.

In den folgenden beiden Schritten wird dann die Verbindung zum MSC (Mobile-services Switching Center) aufgebaut, das die

Schnittstelle zwischen Festnetz und mobilem Netz darstellt. Die in Fig. 1 benutzte Abkürzung 3G-MSC steht dabei für ein MSC der dritten Generation.

Mit der Nachricht 4 (CM Service Request) fragt das mobile Telekommunikationsgerät UE zunächst nach einer Verbindung zu der Schnittstelle MSC, wobei diese Anfrage an die Kontrollstelle SRNC gerichtet ist. Diese sendet daraufhin die Anfrage 5 (RANAP CM Service Request) gemäß dem Protokoll RANAP (Radio Access Network Application Part) an die Schnittstelle MSC. Im MSC wird auch geprüft, ob eine Lokalisierung des mobilen Telekommunikationsgeräts UE überhaupt zulässig ist, wohingegen die Komponente HLR (Fig. 1) prüft, ob das mobile Telekommunikationsgerät UE überhaupt den Lokalisierungsservice unterstützt.

Im sechsten Schritt wird die Verbindung zwischen dem mobilen Telekommunikationsgerät UE einerseits und der jeweiligen Lokalisierungsservicestelle (LCS-Client), z. B. Feuerwehr, Polizei, privater Sicherheitsdienst o. ä., hergestellt.

Bis hierhin hat noch keinerlei Lokalisierung des mobilen Telekommunikationsgeräts UE stattgefunden, obwohl aufgrund des mehrstufigen und relativ langwierigen Verbindungsaufbaus zwischen dem mobilen Telekommunikationsgeräts UE und der Lokali-sierungsstelle (LCS-Client) bereits viel Zeit vergangen ist.

Erst im siebten Schritt wird von dem Mobile Service Switching Center MSC das Signal 7 (RANAP Location Reporting Control) als Aufforderung, daß das mobile Telekommunikationsgerät UE eine Positionsbestimmung durchführen soll, an die Kontrollstelle SRNC gerichtet.

Im achten Schritt findet die eigentliche Positionsbestimmung des mobilen Telekommunikationsgerät UE statt. Diese geschieht beispielweise nach einem Laufzeitverfahren, in dem verschiedene feste Sendeanlagen S1, S2, S3 Daten an das mobile Telekommunikationsgerät UE übermitteln und aus der Laufzeit der jeweiligen Daten der Abstand des UE zu den Sendeanlagen S1, S2 und S3 ermittelt wird.

Die auf diese Weise ermittelte Position des mobilen Telekommunikationsgeräts UE steht dann zur Übermittlung zur Verfügung und werden im neunten Schritt mit dem Signal 9 (RANAP Location Report) an die Schnittstelle zwischen dem Mobilnetz und dem Festnetz, also an das Mobile Service Center MSC, gesandt.

Im nächsten Schritt des zeitlichen Ablaufs wird der MAP Subscriber Location Report als Nachricht 10 vom MSC an den sog. GMLC (Gateway Mobile Location Center) übersandt. In diesem Report sind unter anderem eine Identifizierung des mobilen Telekommunikationsgeräts UE sowie dessen Position und die Zeit, die seit der letzten Positionsbestimmung vergangen ist, enthalten.

Vom GMLC wird als Bestätigung das Signal 11 (MAP Subscriber Location ack) an das MSC rückübersandt.

Anschließend wird als Nachricht 12 (Location information) die Information über die aktuelle Position an den LCS-Client, also die Feuerwehr oder dergleichen, die durch die frühere Nachricht 8 bereits auf den Empfang der Positionsangabe vorbereitet wurde.

Mit der folgenden Nachricht 13 "Emergency Call Release" des Location Service Client (LCS-Client) an das mobile Telekommu-nikationsgerät UE wird der aktuelle Notruf beendet und das System für einen weiteren Emergency Call freigegeben.

Die Nachrichten 14 und 15 verwalten dann noch die Beendigung des aktuellen Notrufs zwischen dem GMLC und der Servicestelle MSC.

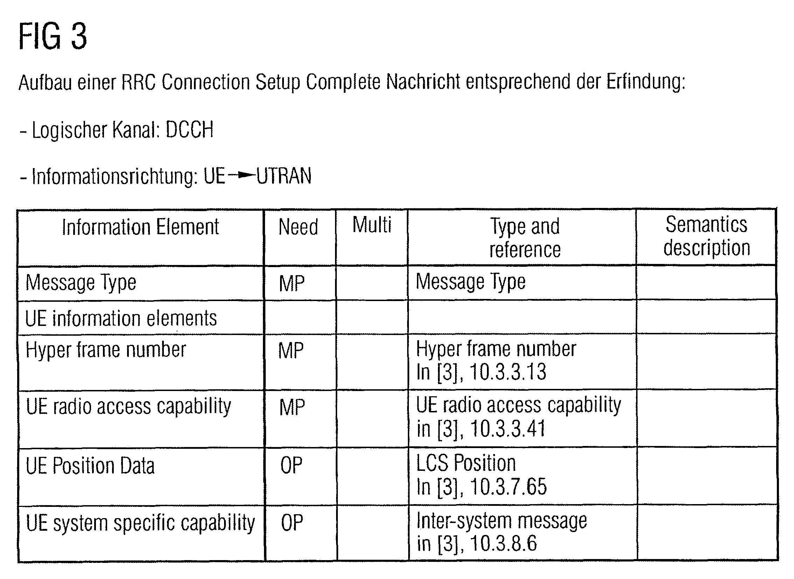

Wenn hingegen erfindungsgemäß vor Einleitung des Emergency Service Calls durch ein mobiles Telekommunikationsgerät UE oder durch dessen Benutzer bereits die Position des UE bekannt ist, kann die geschilderte Prozedur für den Notruf modifiziert und damit erheblich abgekürzt werden:
Bereits mit der Nachricht 3 wird dann vom mobilen Telekommunikationsgerät UE seine aktuelle Position an die Kontrolleinrichtung SRNC für die Sendeanlagen S1, S2, S3 weitergeleitet.
Dieses leitet die Position dann direkt an den Location Service Call (LCS)-Client, also etwa die Feuerwehr, weiter. Das mobile Telekommunikationsgerät UE muß dann nicht auf eine Aufforderung zur Positionsermittlung warten. Der Aufbau der Nachricht 3 (RRC Connection Setup Complete) für die erfindungsgemäße Ausbildung ist in Fig. 3 dargestellt. Es wird deutlich, daß hier dann bereits die Positionsdaten enthalten sind.

Die Positionsbestimmung vorab kann etwa in regelmäßigen zeitlichen Intervallen nach einem der folgenden Verfahren vorgenommen werden:
In einem ersten Verfahren wird von einer jeweils festen Sendeanlage S1, etwa einem Sendemast, in deren Reichweite sich das Telekommunikationsgerät UE, dessen Position ermittelt werden soll, ein die jeweilige Zelle, in dem sich die Sendeanlage befindet, identifizierendes Signal (sog. Cell-ID) ausgesandt. Durch den Empfang dieses Signals von einem in der Zelle befindlichen mobilen Telekommunikationsgerät wird dessen Lage in der Zelle, also im Empfangsbereich der Sendeanlage, festgestellt. Aufgrund der erheblichen Ausdehnung einer solchen Zelle ist die Positionsbestimmung allerdings in ihrer Genauigkeit begrenzt.

In einem insbesondere im ostasiatischen Raum angewandten und gegenüber einem TDD-Modus mit einer üblichen Übertragungsrate von 3,84 Mchips/s in seiner Datenübertragungsgeschwindigkeit auf etwa 1,28 Mchips/s gesenkten Modus, dem sogenannten TD-SCDMA-(time division synchronous code division multiple access)-Modus findet ein weiteres Verfahren zur Positionsbe-stimmung Anwendung, das die gerichtete Signalübertragung nutzt und durch Messung einer Laufzeit eines Signals zwischen einer Sendeanlage und einem mobilen Telekommunikationsgerät UE bei gleichzeitiger Ermittlung der Senderichtung die Position des mobilen Telekommunikationsgeräts UE errechnen kann. Die Senderichtung wird dabei über sogenannte Smart-Antennas ermittelt, die eine gerichtete Abstrahlung und Empfang von Daten ermöglichen. Diese Smart-Antennas müssen sowohl an festen Sendeanlagen wie auch an mobilen Telekommunikationsgeräten UE vorgesehen werden.

In einem weiteren sehr vorteilhaften Verfahren senden die Sendeanlagen Daten in bestimmten Blöcken aus, wobei bestimmte Blöcke nur zeitweise mit Daten, beispielsweise Synchronisierungsdaten, belegt sind und zeitweise als Fenster frei bleiben. In diesen Fensterphasen (Idle Timeslots) braucht das mobile Telekommunikationsgerät UE keine Signale von der Sendeanlage S1 zu empfangen. Die Pause kann daher vom mobilen Telekommunikationsgerät UE zum Empfang von Signalen anderer Sendeanlagen S2, S3 genutzt werden. Daher kann ein Mobiltelekommunikationsgerät UE in diesen Pausen Positionssignale P2, P3 von anderen Sendeanlagen S2, S3 empfangen und somit gleichzeitig von mehreren Sendeanlagen S1, S2, S3 angepeilt werden. Die weiteren Sendeanlagen S2, S3 senden die gleichen Signalfolgen wie die Sendeanlage S1 aus. Somit beginnt ein Timeslot der Sendeanlage S2 oder S3 zur gleichen Zeit wie dieser Timeslot in dem von der Sendeanlage S1 ausgesandten Signal. Immer dann, wenn in der von S1 ausgesandten Signalfolge im entsprechenden Timeslot ein Fenster verbleibt, kann das entsprechende im gleich benannten Timeslot der Sendeanlage S2 oder S3 enthaltene Signal empfangen werden. Auch diese Sendeanlagen belegen nicht in jeder Ausstrahlung den Timeslot mit einem Signal, sondern lassen ihn in regelmäßigen oder unregelmäßigen, jedoch voneinander abweichenden Abfolgen als Idle Slot frei, um Signale anderer Sendeanlagen empfangen zu können.

Das mobile Telekommunikationsgerät UE wertet die Empfangszeitpunkte der im jeweilig offenen Timeslot einer Sendeanlage (z. B. S1) empfangenen Signale des jeweiligen Timeslots weiterer Sendeanlagen (z. B. S2, S3) aus. Dadurch bestimmt das mobile Telekommunikationsgerät UE die Zeitdifferenz Δt1 zwischen dem Beginn des Timeslots und dem Empfangszeitpunkt des in diesen Timeslot gehörigen Signals der Sendeanlage S1. Diesen Wert teilt es der Sendeanlage S1 mit. In gleicher Weise wird die Zeitdifferenz Δt2 zwischen dem Beginn des Timeslots und dem Empfang des zugehörigen Signals der Sendeanlage S2 in einer Pause der Sendeanlage S1 bestimmt und dieser mitgeteilt. Entsprechend wird auch die Zeitdifferenz Δt3 zwischen dem Beginn des Timeslots und dem Empfang des entsprechenden Signals der Sendeanlage S3 bestimmt und der Sendeanlage S1 mitgeteilt.

Von der Sendeanlage S1 werden die so ermittelten Werte der Signalverzögerungen zur Berechnung der genauen Position des mobilen Telekommunikationsgeräts UE verwendet. Hierzu werden jeweils die Differenzen Δt12=Δt1-Δt2 und Δt13=Δt1-Δt3 gebildet. Daraus läßt sich die Position des mobilen Telekommunikationsgeräts UE als Schnittpunkt von Hyperbeln A2 und A3 (Fig. 4) bestimmen. Deren Verläufe ergeben sich aus den bekannten Positionen der Sendeanlagen S2 und S3 sowie aus den Zeitdifferenzen Δt12 und Δt13.

Aus der Signallaufzeit Δt1 ist bei bekannter Signalausbreitungsgeschwindigkeit der Abstand des mobilen Telekommunikationsgeräts UE zu der Sendeanlage S1 bekannt. Somit kann die Position des mobilen Telekommunikationsgeräts aus der Schnittmenge SM der Abstandkreises A1 um die Sendeanlage S1 sowie der Zeitdifferenzhyperbeln A2 und A3 ermittelt werden (Fig. 4). Die Schnittmenge SM gibt die Position des mobilen Telekommunikationsgeräts UE an.

Dadurch, daß die Position bekannt ist und gleich am Anfang der Notrufnachricht übermittelt wird, ist die Zeit zur Ausführung der Notrufnachricht erheblich vermindert.

In einem zweiten Ausführungsbeispiel wird die Position während der Notrufabsendung ermittelt, allerdings in einem von weiteren Komponenten des Mobiltelekommunikationsnetzes TN unabhängigen Verfahren. Hierfür wird das GPS (Global positioning system) zur Positionsbestimmung genutzt. Damit kann eine Genauigkeit von etwa 20 m erreicht werden. Das mobile Telekommunikationsgerät UE muß mit einer GPS-Einheit versehen sein, kann allerdings damit seine Positionsbestimmung deutlich schneller und unabhängig vom Mobiltelekommunikationsnetz TN vornehmen, beispielsweise auch bei schlechtem Empfang von Signalen der Sendeanlagen S1, S2, S3....

Eine Beschleunigung der Notrufabsetzung ist daher auch bei Nutzung des GPS während der Notrufabsetzung erreicht. Es versteht sich, daß eine Positionsbestimmung unter Nutzung des GPS ebenfalls vorab in einem regelmäßigen Zeittakt erfolgen kann und die Positionsdaten dann gespeichert zur Verwendung in einem Notruf zur Verfügung stehen.

## Patentansprüche

1. Verfahren zur Notrufabsendung eines mobilen Telekommunikationsgeräts (UE)in einem UMTS-Mobiltelekommunikationsnetz,
wobei in einem ersten Schritt zu einem Serving Radio Network Controller (SRNC) eine Anfrage RRC connection request (1) nach Aufbau einer RRC-Verbindung gesendet wird,
wobei in einem zweiten Schritt vom Serving Radio Network Controller (SRNC) nach erfolgreicher Erkennung der Anfrage (1) die Bestätigung der Anfrage (1) durch ein Signal RRC Connection Setup (2) an das Telekommunikationsgerät (UE) zurückgesandt wird, und wobei in einem dritten Schritt vom Telekommunikationsgerät (UE) mit einer Nachricht RRC Connection Complete (3) die aufgebaute RRC-Verbindung zum Serving Radio Network Controller bestätigt wird, die aktuelle Position des jeweiligen mobilen Telekommunikationsgeräts vor Absendung des Notrufs oder während der Absendung des Notrufs unabhängig von weiteren Bestandteilen des Mobiltelekommunikationsnetzes ermittelt und mit der Nachricht RRC Connection Complete bereits im dritten
Schritt an den Serving Radio Network Controller übertragen wird, und
wobei dann anschließend mit Hilfe eines Mobile-services Switching Centers (MSC), das in Verbindung mit dem Serving Radio Network Controller steht, eine direkte Verbindung zwischen dem Telekommunikationsgerät (UE) und einem Location Service Call Client (LCS Client) hergestellt wird.

2. Verfahren nach Anspruch 1,
**dadurch gekennzeichnet,**
**dass** die Positionsermittlung unabhängig vom Benutzer des mobilen Telekommunikationsgeräts (UE) nach einer Regelvorgabe ermittelt wird.

3. Verfahren nach einem der Ansprüche 1 oder 2, **dadurch gekennzeichnet,**
**dass** die Regelvorgabe eine zeitlich getaktete Ermittlung der Position vorsieht.

4. Verfahren nach einem der Ansprüche 1 bis 3, **dadurch gekennzeichnet,**
**dass** das mobile Telekommunikationsgerät (UE) über eine GPS-(Global Positioning System)-Nutzung seine Position bestimmt.

5. Verfahren nach einem der Ansprüche 1 bis 4,
**dadurch gekennzeichnet,**
**dass** die Positionsbestimmung über ein Laufzeitverfahren erfolgt.

6. Verfahren nach Anspruch 5,
**dadurch gekennzeichnet,**
**dass** die Laufzeiten von Signalen verschiedener fester Sender in Fensterzeiten (Idle Slots) zumindest eines anderen Senders ermittelt werden.

7. Verfahren nach einem der Ansprüche 5 oder 6, **dadurch gekennzeichnet,**
**dass** die Laufzeiten von Signalen weiterer mobiler Telekommunikationsgeräte, die ihrerseits regelmäßig eine eigene Positionsbestimmung durchführen, zur Positionsbestimmung genutzt werden.

8. Mobiltelekommunikationsnetz (TN) mit mobilen Telekommunikationsgeräten (UE) und einem Serving Radio Network Controller (SRNC), wobei in den mobilen Telekommunikationsgeräten (UE) und dem Serving Radio Network Controller Mittel zur Durchführung der einzelnen Schritte des Verfahrens nach einem der Ansprüche 1 bis 7 vorhanden sind.

9. Telekommunikationsgerät (UE) zur Notrufabsendung in einem UMTS-Mobiltelekommunikationsnetz,
mit Mitteln zur Versendung einer Anfrage RRC connection request (1) nach Aufbau einer RRC-Verbindung zu einem Serving Radio Network Controller (SRNC),
mit Mitteln zum Empfang einer vom Serving Radio Network Controller (SRNC) stammenden Bestätigung der Anfrage durch ein Signal RRC Connection Setup (2),
und mit Mitteln zur Versendung einer Nachricht RRC Connection Complete (3) zur Bestätigung der aufgebauten RRC-Verbindung zum Serving Radio Network Controller, wobei das Telekommunikationsgerät (UE) über Mittel verfügt, die aktuelle Position des Telekommunikationsgeräts vor Absendung des Notrufs oder während der Absendung des Notrufs unabhängig von weiteren Bestandteilen des Mobiltelekommunikationsnetzes zu ermitteln und mit der Nachricht RRC Connection Complete an den Serving Radio Network Controller zu übertragen.

## Claims

1. Method for sending an emergency call from a mobile telecommunications device (UE) in a UMTS mobile telecommunications network,
wherein in a first step, after an RRC connection has been set up, an RRC connection request (1) is sent to a serving radio network controller (SRNC),
wherein in a second step, following successful detection of the request (1), the acknowledgment of the request (1) is returned to the telecommunications device (UE) by the serving radio network controller (SRNC) by means of an RRC connection setup signal (2), and
wherein in a third step the established RRC connection is confirmed to the serving radio network controller by the telecommunications device (UE) by means of an RRC connection complete message (3),
the current position of the respective mobile telecommunications device is determined prior to the sending of the emergency call or during the sending of the emergency call independently of further components of the mobile telecommunications network and is transmitted together with the RRC connection complete message already in the third step to the serving radio network controller, and
wherein a direct connection between the telecommunications device (UE) and a location service call client (LCS Client) is thereupon established with the aid of a mobile-services switching centre (MSC) that is connected to the serving radio network controller.

2. Method according to claim 1,
**characterised in that**
the position is determined independently of the user of the mobile telecommunications device (UE) according to a rule specification.

3. Method according to one of claims 1 or 2, **characterised in that**
the rule specification provides a time-clocked determination of the position.

4. Method according to one of claims 1 to 3, **characterised in that**
the mobile telecommunications device (UE) determines its position by using the GPS (Global Positioning System).

5. Method according to one of claims 1 to 4, **characterised in that**
the position is determined by way of a propagation delay method.

6. Method according to claim 5,
**characterised in that**
the propagation delays of signals of different fixed transmitters are determined in window periods (idle slots) of at least one other transmitter.

7. Method according to one of claims 5 or 6, **characterised in that**
the propagation delays of signals of further mobile telecommunications devices which for their part regularly perform their own position determination are used for position determination.

8. Mobile telecommunications network (TN) having mobile telecommunications devices (UE) and a serving radio network controller (SRNC), wherein means for performing the individual steps of the method according to one of claims 1 to 7 are present in the mobile telecommunications devices (UE) and the serving radio network controller (SRNC).

9. Telecommunications device (UE) for sending an emergency call in a UMTS mobile telecommunications network,
having means for sending an RRC connection request (1) after an RRC connection has been set up to a serving radio network controller (SRNC),
having means for receiving an acknowledgment originating from the serving radio network controller (SRNC) by means of an RRC connection setup signal (2),
and having means for sending an RRC connection complete message (3) in order to confirm the established RRC connection to the serving radio network controller, wherein the telecommunications device (UE) has means for determining the current position of the telecommunications device prior to sending the emergency call or during the sending of the emergency call independently of further components of the mobile telecommunications network and for transmitting said position together with the RRC connection complete message to the serving radio network controller.

## Revendications

1. Procédé d'émission d'un appel d'urgence d'un appareil ( UE ) de télécommunication mobile dans un réseau de télécommunication mobile UMTS,
dans lequel, dans un premier stade, on envoie à un Serving Radio Network Controller ( SRNC ) une demande RRC connection request ( 1 ) après l'établissement d'une liaison RRC,
dans lequel, dans un deuxième stade, il est retourné par le Serving Radio Network Controller ( SRNC ), après que la reconnaissance de la demande ( 1 ) a été couronnée de succès, la confirmation de la demande ( 1 ) par un signal RRC Connection Setup ( 2 ) à l'appareil ( UE ) de télécommunication, et
dans lequel, dans un troisième stade, il est confirmé, par l'appareil ( UE ) de télécommunication par un message RRC Connection Complete ( 3 ) au service Serving Radion Network Controller, l'établissement de la liaison RRC, la position présente de l'appareil de télécommunication respectif, avant l'émission de l'appel d'urgence ou pendant l'émission de l'appel d'urgence, est déterminée indépendamment d'autres parties constituantes du réseau de télécommunication mobile et étant transmise avec le message RRC Connection Complete déjà au troisième stade au Serving Radio Network Controller, et dans lequel, ensuite, à l'aide d'un Mobile-services Switching Centers ( MSC ), qui est en liaison avec le Serving Radio Network Controller, une liaison directe est ménagée entre l'appareil ( UE ) de télécommunication et un Location Service Call Client ( LCS Client ).

2. Procédé suivant la revendication 1,
**caractérisé**
**en ce que** la détermination de position s'effectue indépendamment de l'utilisateur de l'appareil ( UE ) de télécommunication mobile suivant une prescription de règle.

3. Procédé suivant l'une des revendications 1 ou 2, **caractérisé**
**en ce que** la prescription de règle prévoit une détermination de la position cadencée dans le temps.

4. Procédé suivant l'une des revendications 1 à 3, **caractérisé**
**en ce que** l'appareil ( UE ) de télécommunication mobile détermine sa position en utilisant un GPS ( Global Positioning System ).

5. Procédé suivant l'une des revendications 1 à 4, **caractérisé**
**en ce que** la détermination de position s'effectue par un procédé de temps de parcours.

6. Procédé suivant la revendication 5,
**caractérisé**
**en ce que** l'on détermine les temps de parcours de signaux d'émetteurs fixes différents dans des créneaux temporels ( idle slots ) d'au moins un autre émetteur.

7. Procédé suivant l'une des revendications 5 ou 6, **caractérisé**
**en ce que** l'on utilise, pour la détermination de position, les temps de parcours de signaux d'autres appareils de télécommunication mobile, qui effectuent de leur côté régulièrement une propre détermination de position.

8. Réseau ( TN ) de télécommunication mobile, comprenant des appareils ( UE ) de télécommunication mobile et un Serving Radio Network Controller ( SRNC ), dans lequel il y a, dans les appareils ( UE ) de télécommunication mobile et dans le Serving Radio Network Controller, des moyens pour effectuer les divers stades du procédé suivant l'une des revendications 1 à 7.

9. Appareil ( UE ) de télécommunication pour l'émission d'appels d'urgence dans un réseau de télécommunication mobile UMTS, comprenant des moyens d'envoi d'une demande RRC connection request ( 1 ) après établissement d'une liaison RRC à un Serving Radio Network Controller ( SRNC ),
comprenant des moyens de réception d'une confirmation en provenance du Serving Radio Network Controller ( SRNC ) de la demande par un signal RRC Connexion Setup ( 2 ),
et comprenant des moyens d'envoi d'un message RRC Connection Complete ( 3 ) pour la confirmation de l'établissement de la liaison RRC vers le Serving Radio Network Controller, dans lequel l'appareil ( UE ) de télécommunication dispose de moyens, qui déterminent la position présente de l'appareil de télécommunication, avant l'émission de l'appel d'urgence ou pendant l'émission de l'appel d'urgence, indépendamment d'autres éléments constitutifs du réseau de télécommunication mobile et pour la transmettre au Serving Radio Network Controller par le message RRC Connection Complete.
